Europäisches Patentamt

European Patent Office

Office européen des brevets

(19)

(11) Publication number: **0 082 686**

**B1**

(12) **EUROPEAN PATENT SPECIFICATION**

(45) Date of publication of patent specification: **13.08.86**

(21) Application number: **82306740.0**

(22) Date of filing: **17.12.82**

(51) Int. Cl.⁴: **G 01 L 5/13,** G 01 L 1/14, G 01 L 1/26

(54) **Load sensor, e.g. for sensing a vehicle draft load.**

(30) Priority: **21.12.81 US 332577**

(43) Date of publication of application:
**29.06.83 Bulletin 83/26**

(45) Publication of the grant of the patent:
**13.08.86 Bulletin 86/33**

(84) Designated Contracting States:
**AT DE FR GB IT SE**

(56) References cited:
**EP-A-0 091 282**
**FR-A-1 242 070**
**US-A-3 713 333**
**US-A-4 248 317**
**US-A-4 287 776**

(73) Proprietor: **DEERE & COMPANY**
**1 John Deere Road**
**Moline Illinois 61265 (US)**

(72) Inventor: **Espiritu Santo, Eugenio**
**1720 Cottage Lane**
**Cedar Falls Iowa 50613 (US)**
Inventor: **Baxter, Kenneth Dale**
**628 Oak Park Boulevard**
**Cedar Falls Iowa 50613 (US)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a load sensor comprising an open frame deformable by an applied load, and a transducer releasably attached between two limbs of the frame and providing a signal dependent upon the space between the two limbs.

Such a sensor may be used in particular as a draft load sensor for a tractor or other vehicle. The frame is tensioned by the draft load to pull the said limbs slightly together. The transducer measures the distance between the limbs and hence, by virtue of calibration, the draft load.

A sensor of the type set out above is known from US 1 528 627. The transducer consists of two resistive stacks of plates held in the frame by set screws passing through the two limbs of the frame. Such an arrangement is also known from our European application EP 0 057 100 claiming a priority of 26.01.81 and puslibhed 04.08.82 which forms part of the state of the art solely by virtue of EPC Art 54(3).

A related device employing a dial indicator instead of a transducer is known from US 3073 155. Again the indicator is attached by a fixing screw. US 4253331 discloses a sensor without explaining how the transducer is attached, whether releasably or permanently (as is the case in other known sensors). A disadvantage of the known sensor is that assembly of the sensors and servicing or replacement of defective transducers require parts to be screwed and unscrewed. Moreover the screws have to be tightened up to the correct degree to provide correct adjustment of the transducer.

The object of the present invention is to provide a sensor which is substantially easier to assemble and service.

The invention is characterised in that the transducer is compressible in length against the force of a biasing spring in the transducer to such an extent that the transducer can be pushed in between the said limbs, and by complementary engaging parts at the end of the transducer and on the limbs which engage by virtue of lengthwise expansion of the transducer to locate and fix the transducer in the frame.

The embodiment of the invention described below meets subsidiary objects which are to protect the transducer from the environment in a simple manner and to provide for ready adjustment of the sensor.

In the preferred embodiment, the sensor comprises a frame which may be inserted in a linkage subject to the tension. The frame has a pair of limbs with ends connected together and with space-apart central portions therebetween. The central portions have bores or recesses for releasably receiving a pair of projections which project from opposite ends of an inductive position transducer. The transducer has a cap and a base coupled to the core and coil portions respectively, of the tranducer. A spring or springs bias the cap and base apart so that the projections remain in the recesses or bores. The spring may be compressed to permit insertion or renewal of the transducer from the frame. A rubber boot connected between the cap and base protects the transducer components from the environment.

The invention will now be described in more detail, by way of example, with reference to the accompanying drawings, in which:

Fig. 1 is a partial sectional view of a draft sensor embodying the present invention,

Fig. 2 is an enlarged cross-sectional view of a portion of Fig. 1.

The draft or load sensor 10 includes a frame 12 having a pair of limbs 14 and 16 having spaced-apart central portions 18 and 20. The limb portion 18 includes a partially threaded bore 22 extending therethrough. The other limb portion 20 includes a blind bore or recess 24. Further details pertaining to the limbs may be found in EP 0 057 100.

A spring-loaded, snap-in type transducer 26 is mounted in the space between the limb portions 18 and 20 to sense the separation between the portions 18 and 20 which varies as a function of the tension or compression-type forces applied to the ends of the frame 12. The sensor 10 can be inserted in any type of structural link wherein it is desired to measure the forces applied to the link. For example, the sensor 10 can be inserted in any link or links of a conventional 3-point hitch or other type of hitch of an agricultural tractor to measure draft forces applied to that link when the hitch is pulling an implement.

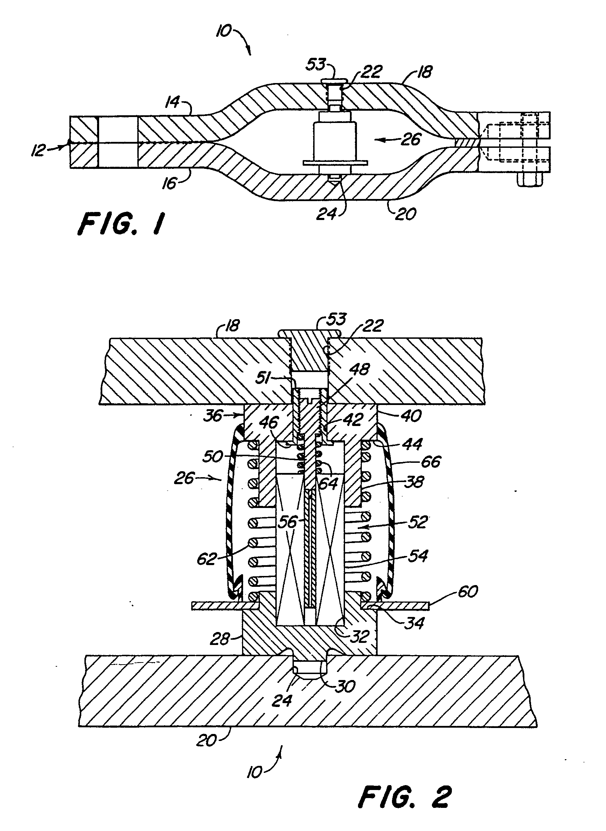

Turning now to Fig. 2, the transducer 26 includes a cylindrical base 28 with a projection 30 which is received by the bore 24. The base 28 also includes a blind bore 32 and an annular external shoulder 34. The transducer 26 also includes a cylindrical cap 36 with a hollow sleeve portion 38, a flange portion 40 which includes a bore 42 extending therethrough and which engages the limb portion 18. The flange portion 40 defines an external annular shoulder 44. A hollow flanged insert 46 is press-fitted into the bore 42. The insert 46 is threaded to receive a slotted adjustment and support screw 48 which includes an inwardly projecting rod 50. The outer end of the insert 46 forms a projection 51 which projects into bore 22. A cover screw 53 seals the outer end of the bore 22, but may be removed to permit access to the adjustment screw 48.

A conventional linear variable differential inductive transducer 52 is mounted between the base 28 and the cap 36. Such a transducer is available from U.S. manufacturers such as Schaevitz Engineering and Trans-Tek, Inc. An inductor transducer is superior to capacitive or resistive-type transducers because it is less affected by changes in the moisture content of the atmosphere. The transducer 52 has a hollow, cylindrical coil assembly 54 which includes the usual one primary and two secondary coils (not shown). On end of the coil assembly is firmly held in the bore 32 of base 28. The other end of the coil assembly 54 is slidably received by the sleeve 38 of the cap 36. A conventional hollow, cylindrical inductive transducer core member 56 is fixed to the ends of the rod 50 of the adjustment and support screw 48 for sliding movement within the coil assembly 54.

A circuit board 60 may be mounted on the base 28 against the shoulder 34. A spring 62 has one end engaging the circuit board 60 and another end engaging the shoulder 44 of the cap 36. The spring 62 is biased to urge the base 28 and cap 36 away from each other to maintain the projections 30 and 51 positioned with the bores 24 and 22 respectively. The spring 62 may be compressed to permit the insertion and removal of the transducer 26 from the frame 12. Another spring 64 is mounted around the rod 50 and is compressed between a shoulder on the screw 48 and the end of the core assembly 54 to urge them apart. A generally cylindrical and flexible rubber protective boot 66 protects the interior of the assembly from the environment.

As the tension or compression forces on the ends of the frame 12 are varied, the distance between the limb portions 18 and 20 varies, thus causing the position of the core 56 to vary with respect to the coil assembly 54. A signal representing core-coil position, and thus, the force on the frame 12 may be produced with the use of a conventional inductive transducer circuit, such as described on page 17—56 of Fink's "Electronics Engineers' Handbook", published by McGraw-Hill Book Company. The components of this circuit may be positioned on the circuit board 60.

As described the transducer 26 has end projections 30 and 51 engaging in holes 24 and 22 in the limbs 20 and 18. Alternatively, there could be projections on the limbs 18 and 20 engaging in holes in the ends of the transducer.

It should be mentioned that the springs 62 and 64 play virtually no part in determining the space between the limbs 18 and 20. The forces which they create are negligible compared with the force arising from deformation of the frame 12. The snap-in construction of the transducer therefore does not affect the accuracy of the measurements.

## Claims

1. A load sensor comprising an open frame (12) deformable by an applied load, and a transducer (26) releasably attached at respective ends between two limbs (18, 20) of the frame and providing a signal dependent upon the space between the two limbs, characterised in that the transducer (26) is a linear position transducer and comprises a base member (28) at one end, a cap member (36) at the other end, and a compression spring (62) acting between these members, so as to urge projections (30, 51) on the ends of the transducer (26) into recesses (24, 22) in the limbs (20, 18), and first and second relatively movable parts (54 and 56) fixed to the base member (28) and the cap member (36) respectively, with an adjusting member (48) for adjusting the position of the second part (56) of the transducer relative to the cap member (36), and in that the transducer is compressible in length against the force of the biasing spring (62) for snapping the transducer in and out of place between the said limbs (18, 20).

2. A load sensor according to claim 1, characterised in that the first transducer part (54) fits in a blind bore (32) in that base member (28), the second transducer part (56) is attached to an adjusting screw (48) in the cap member (36), and the spring (62) fits over the base and cap members and abuts flanges thereon (34, 44).

3. A load sensor according to claim 2, characterised in that the first transducer part (54) is slidably guided in a bore in the cap member (36).

4. A load sensor according to claim 2 or 3, characterised in that the adjusting screw (48) is screwed into an insert (46) pressed into a bore (42) through the cap member (36).

5. A load sensor according to claims 2, 3 or 4, characterised in that the adjusting screw (48) has a projecting rod (50) which is slidably guided in the first transducer part (54) and which has the second transducer part (56) fixed to its end.

6. A load sensor according to any of claims 1 to 5, characterised by a flexible sleeve (66) extending between the cap member (38) and the base member (28) to protect the transducer (26).

## Patentansprüche

1. Lastfühler mit einem offenen Rahmen (12), der durch eine aufgebrachte Last verformbar ist, und mit einem Wandler (26), der lösbar an entsprechenden Enden zwischen zwei Schenkeln (18, 20) des Rahmens angebracht ist und ein Signal in Abhängigkeit von dem Abstand zwischen den beiden Schenkeln liefert, dadurch gekennzeichnet, daß der Wandler (26) ein linearer Stellungswandler ist und ein Basisglied (28) an einem Ende, ein Abdeckungsglied (36) am anderen Ende und eine Kompressionsfeder (62) aufweist, die zwischen diesen Gliedern wirksam ist, derart, daß sie Vorsprünge (30, 51) auf den Enden des Wandlers (26) in Ausnehmungen (24, 22) in den Schenkeln (20, 18) drängt, sowie erste und zweite relativ bewegbare Teile (54 und 56), die an dem Basisglied (28) bzw. an dem Abdeckglied (36) befestigt sind, wobei ein Einstellglied (48) zum Justieren der Stellung des zweiten Teils (56) des Wandlers relativ zu dem Abdeckglied (36) vorgesehen ist, und daß der Wandler der Länge nach gegen die Kraft der Vorspannfeder (62) zusammendrückbar ist, um ihn in die und aus der Stellung zwischen den genannten Schenkeln (18, 20) schnappen zu lassen.

2. Lastfühler nach Anspruch 1, dadurch gekennzeichnet, daß der erste Wandlerteil (54) in eine Blindbohrung (32) in dem Basisglied (28) paßt, der zweite Wandlerteil (56) an einer Einstellschraube (48) in dem Abdeckelemente (36) angebracht ist und die Feder (62) über das Basis- und das Abdeckglied greift und an Flanschen (34, 34) dieser Glieder anliegt.

3. Lastfühler nach Anspruch 2, dadurch gekennzeichnet, daß der erste Wandlerteil (54) in einer Bohrung des Abdeckgliedes (36) verschiebbar geführt ist.

4. Lastfühler nach Anspruch 2 oder 3, dadurch gekennzeichnet, daß die Einstellschraube (48) in einen Einsatz (46) eingeschraubt ist, der in eine Bohrung (42) durch das Abdeckglied (36) eingepreßt ist.

5. Lastfühler nach Anspruch 2, 3 oder 4, dadurch gekennzeichnet, daß die Einstellschraube (48) eine vorspringende Stange (50) aufweist, die in dem ersten Wandlerteil (54) verschiebbar geführt ist und an derem Ende der zweite Wandlerteil (56) befestigt ist.

6. Lastfühler nach irgendeinem der Ansprüche 1 bis 5, gekennzeichnet durch eine flexible Hülse (66), die sich zwischen dem Abdeckglied (38) und dem Basisglied (28) zum Schutz des Wandlers (26) erstreckt.

## Revendications

1. Capteur de mesure de charge comprenant un cadre ouvert (12) déformable sous l'effet d'une charge appliquée et un transducteur (26) fixé amoviblement par ses extrémités respectives entre deux branches (18, 20) du cadre et fournissant un signal fonction de l'écartement entre les deux branches, caractérisé en ce que le transducteur (26) est un transducteur de position linéaire et comprend une embase ou un socle (28) à une extrémité, un capuchon (36) à l'autre extrémité, et un ressort de compression (62) agissant entre ces éléments, de manière à solliciter des protubérances ou bossages (30, 51) prévus sur les extrémités du transducteur (26) dans des cavités (24, 22) prévues dans les branches (20, 18), et une première et une seconde parties (54 et 56) mobiles l'une par rapport à l'autre, fixées sur le socle (28) et sur le capuchon (36) respectivement, avec un élément de réglage (48) pour régler la position de la seconde partie (56) du transducteur relativement au cupuchon (36), et en ce que le transducteur est compressible en longueur en antagonisme à la force du ressort de sollicitation (62) pour l'engagement en place et le dégagement élastiques du transducteur entre ces branches (18, 20).

2. Capteur de mesure de charge suivant la revendication 1, caractérisé en ce que la première partie (54) du transducteur s'engage dans un trou borgne (32) prévu dans le socle (28), et en ce que la seconde partie (56) du transducteur est fixée sur une vis de réglage (48) prévue dans le capuchon (36), et en ce que le ressort (62) s'engage sur le socle et sur le capuchon et prend appui sur des brides (34, 44) prévues sur ces éléments.

3. Capteur de mesure de charge suivant la revendication 2, caractérisé en ce que la première partie (54) du transducteur est guidée de façon coulissante dans un perçage prévu dans le capuchon (36).

4. Capteur de mesure de charge suivant la revendication 2 ou 3, caractérisé en ce que la vis de réglage (48) est vissée dans un noyeu (46) engagé à force dans un perçage (42) à travers le capuchon (36).

5. Capteur de mesure de charge suivant la revendication 2, 3 ou 4, caractérisé en ce que la vis de réglage (48) comporte une tige en saillie (50) qui est guidée de façon coulissante dans la première partie (54) du transducteur et à l'extrémité de laquelle la seconde partie (56) du transducteur est fixée..

6. Capteur de mesure de charge suivant l'une quelconque des revendications 1 à 5, caractérisé par une gaine flexible (66) s'étendant entre le capuchon (38) et le socle (28) pour protéger le transducteur (26).

FIG. 1

FIG. 2

.1